Europäisches Patentamt

European Patent Office

Office européen des brevets

(19)

(11) **EP 1 286 130 A1**

(12) **EUROPÄISCHE PATENTANMELDUNG**

(43) Veröffentlichungstag:
**26.02.2003 Patentblatt 2003/09**

(51) Int Cl.⁷: **G01B 3/16**, B43L 9/04,
E04F 11/02

(21) Anmeldenummer: 01120009.4

(22) Anmeldetag: **20.08.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(71) Anmelder: **Saage Treppenbau GmbH & Co. KG**
**41334 Nettetal-Leuth (DE)**

(72) Erfinder:
• **Saage, Detlev**
**41334 Nettetal (DE)**

• **Vyskocil, Volker**
**41334 Nettetal (DE)**

(74) Vertreter:
**König, Gregor Sebastian, Dipl.-Biol. et al**
**König-Szynka-von Renesse**
**Patentanwälte**
**Lohengrinstrasse 11**
**40549 Düsseldorf (DE)**

(54) **Messzirkel**

(57)    Die Erfindung betrifft einen Meßzirkel mit mindestens zwei voneinander bewegbar verbundenen Schenkeln mit Mitteln zum Messen des Abstandes der freien Enden der Schenkel zueinander oder zum Messen des Winkels zwischen den Schenkeln, mindestens einen Neigungssensor und Mitteln zum Messen einer Drehung der durch die Schenkel aufgespannten Ebene. Daneben wird vorgeschlagen, den Meßzirkel mobil zur Vermessung von Treppenkoordinaten zu verwenden und in einen Verfahren zum Ermitteln der Biegekoordinaten zum Biegen eines Handlaufs einzusetzen.

Figur 1

**Beschreibung**

Die Erfindung betrifft ein Koordinatenmeßgerät zur Ermittlung von Raumpunkten innerhalb eines Raumvolumens. Die Erfindung betrifft des weiteren ein Verfahren zum Ermitteln von Raumlagen.

Im Stand der Technik sind Koordinatenmeßgeräte bekannt, die beispielsweise in der Automobilindustrie stationär installiert werden, um Fahrzeugfertigungsteile in 3-dimensionalen Koordinaten vermessen zu können. Ebenso sind mobile Koordinatenmeßgeräte bekannt, die an das zu vermessende Objekt gebracht werden und so einen Einsatz direkt vor Ort ermöglichen.

Für das mobile Messen von Koordinaten stehen dabei zwei verschiedene Lösungen zur Verfügung. Zum Einsatz kommen diesbezüglich mechanische Systeme, sogenannte Messarme, und optische Systeme, bei denen der Raumpunkt beispielsweise über den Lichtweg eines Lasers oder über die Laufzeit von Wellen oder via GPS (Global Positioning System) ermittelt wird.

Ein solcher Meßarm besteht aus zwei Armen mit jeweils vorbestimmter Länge, die miteinander durch ein Gelenk verbunden sind. Während der eine Arm an seinem freien Endpunkt an einem festen Bezugspunkt festgelegt wird und sich der Arm um diesen Punkt drehen läßt, kann der andere Arm über das Drehgelenk von dem ersten Arm weggeschwenkt werden, so daß ein am Ende des zweiten Arms vorgesehener Meßtaster an einen zu vermessenden Raumpunkt geführt werden kann. Dadurch ist es möglich, jeden beliebigen Raumpunkt innerhalb eines definierten Kugelvolumens aus verschiedenen Antastrichtungen zu erreichen. Durch die Messung der Gelenk-Winkelstellungen mit Winkelencodern kann die vollständige Information zur Bestimmung der insgesamt sechs Freiheitsgrade des Ortspunktes, d.h. die Punktposition x, y, z und die Orientierung i, j, k des Taststifts erhalten werden.

Derartige Meßarme sind zur Vermessung spezieller Produktlinien konzipiert, so daß mit einem speziellen Meßarm Objekte vermessen werden, die in einem einheitlichen Größenbereich liegen.

Aufgabe der Erfindung ist es, eine mobile Koordinatenmeßvorrichtung zu schaffen, die eine Koordinatenerfassung auf einfache und schnelle Weise am Meßort ermöglicht. Überdies ist es eine Aufgabe der Erfindung, ein Verfahren vorzusehen, mit dem die Raumlage eines im Raum angeordneten Körpers unterschiedlicher Größe ermittelt wird. Es ist insbesondere eine Aufgabe der Erfindung, eine Vorrichtung und ein Verfahren zu schaffen, mit denen Treppenkoordinaten einer Treppe ermittelt werden, um daraus Informationen zur Fertigung eines Handlaufs der Treppe zu gewinnen und verarbeiten zu können.

Betreffend die mobile Koordinatenmeßvorrichtung wird die Aufgabe erfindungsgemäß durch einen elektronischen Meßzirkel nach Anspruch 1 gelöst. Vorteilhafte Ausführungsformen des elektronischen Zirkels sind in den darauf bezogenen Unteransprüchen angegeben.

Betreffend das Verfahren wird die Aufgabe erfindungsgemäß durch die Verwendung einer mobilen Anlage gemäß Anspruch 10 und durch ein Verfahren zur Berechnung von Handlaufkoordinaten nach Anspruch 11 gelöst. Vorteilhafte Ausführungsformen des Verfahrens sind in den darauf bezogenen Unteransprüchen angegeben.

Durch die Erfindung wird ein Zirkel mit mindestens zwei zueinander bewegbar verbundenen Schenkeln bereitgestellt, der Mittel zum Messen des Abstandes der Schenkel zueinander oder zum Messen des Winkels zwischen den Schenkeln und mindestens einen Neigungssensor aufweist. Als Zirkel ist hierbei jede Art von Vorrichtung zu verstehen, die es erlaubt, zwei Ortspunkte mechanisch in Relation zueinander zu setzen und den Abstand dieser Ortspunkte zu ermitteln, indem der Abstand der Endpunkte der die Punkte verbindenden Vorrichtung festgestellt wird. Dieser Abstand kann dabei elektronisch, mechanisch, optisch oder mit beliebigen physikalischen Mitteln festgestellt werden. Die zwei zueinander bewegbaren Schenkel sind diejenigen Mittel des Zirkels, die mit ihren Endpunkten an den zu vermessenden Ortspunkten im Raum festgelegt werden. Als Neigungssensor sind alle Vorrichtungen zu verstehen, mit denen sich die Neigung eines Körpers ermitteln läßt.

Durch den erfindungsgemäßen Zirkel lassen sich in einer vorteilhaften Weiterbildung alle sechs Freiheitsgrade, d.h. die Ortspunkte des zu ermittelnden Raumpunktes x, y, z, entsprechend dem Endpunkt des einen Schenkels, sowie die Orientierung i, j, k dieses, an den Raumpunkt bewegten Zirkelschenkels ermitteln. Diesbezüglich wird ein Mittel vorgesehen, mit dem sich der Richtungsvektor derjenigen Ebene bestimmen läßt, die durch die beiden Schenkel des Zirkels aufgespannt wird.

Eine Ermittlung des Raumpunktes kann dabei folgendermaßen erfolgen:

Zur eindeutigen Bestimmung eines Raumpunktes sind die drei Raumkoordinaten in den kartesischen Koordinatenparametern x, y, und z oder in entsprechenden Polarkoordinatenparametern r, $\alpha$ und $\beta$ anzugeben, bei denen r die Länge des Meßpunktes zum Koordinatenursprung, der Parameter $\alpha$ den Winkel von der Grundfläche des Koordinatensystems zum Meßpunkt und der Parameter $\beta$ den Raumwinkel derjenigen Ebene ist, die durch die Winkelschenkel des Winkels $\alpha$ aufgespannt ist.

Zur Ermittlung der Polarkoordinaten eines Meßpunktes wird der Zirkel mit seinem ersten Schenkel an einem Fixpunkt im Raum festgelegt, der vorteilhafterweise mit dem virtuellen Koordinatenursprung des Meßraumes zusammenfällt und zu dessen Position die relativen Koordinaten des zu messenden Raummeßpunktes ermittelt werden sollen. Ist das Ende des anderen, d.h. des zweiten Schenkels an den zu messenden Ortspunkt geführt worden, wird der Abstand zwischen dem Meßpunkt und dem Fixpunkt gemessen.

Bei der Messung des Abstandes r zwischen den beiden Schenkelendpunkten wird in einer vorteilhaften Weiterbildung ein am Gelenkpunkt der Verbindung zwischen den beiden Schenkeln angeordneter Drehgeber verwendet, der ein zum aufgespannten Winkel zwischen den beiden Schenkeln proportionales elektrisches Signal ausgibt. Bei bekanntem Abstand der Schenkelendpunkte zum Drehgelenkpunkt, d.h. der Länge der beiden Schenkel, kann über den Winkelsatz der ebenen Trigonometrie der Abstand r berechnet werden.

Zur Festlegung des Parameters $\alpha$ wird zum einen die Winkelstellung zwischen den beiden Zirkelschenkeln oder deren Abstand zueinander und zum anderen der Neigungswinkel zumindest eines Schenkels relativ zu einer der durch zwei Koordinatenachsen aufgespannten Ebene ermittelt. Das geschieht erfindungsgemäß mit einem Neigungssensor, der vorteilhafterweise an dem ersten, im Koordinatenursprung festgelegten Schenkel angeordnet ist.

In einem Fall, bei dem die zwischen den Schenkeln aufgespannte Ebene nicht senkrecht auf die Grundfläche des Koordinatensystems, d.h. die xy-Ebene, steht, wird gemäß der zuvor erwähnten vorteilhaften Weiterbildung ein zweiachsiger Neigungssensor verwendet, um die Orientierung des zweiten Schenkels ermitteln zu können. Damit ist es möglich, eine Messung eines Ortspunktes vorzunehmen, bei der der Zirkel um die Verbindungsachse zwischen den Schenkelendpunkten gekippt ist. Mit Hilfe eines zweiachsigen Neigungssensors läßt sich ein zweiter an einer beliebigen Stelle auf dem zweiten Schenkel befindlicher virtueller Punkt festlegen. Aufgrund der beiden ermittelten Ortspunkte läßt sich die Orientierung des zweiten Zirkelschenkels dann durch Verbinden dieser beiden Punkte und durch Geradenbestimmung dieser Verbindung exakt bestimmen. Damit sind alle sechs Freiheitsgrade x, y, z, i, j und k des zweiten Zirkelschenkels bestimmt.

Die dritte Polarkoordinate $\beta$ legt nun den Raumwinkel derjenigen Meßebene fest, in der der Winkel $\alpha$ gemessen worden ist. Die Ermittlung dieser Koordinate kann auf zweierlei Art erfolgen:

Ist ein zweiter Drehgeber am Fuß des ersten Schenkels angeordnet, kann die Drehstellung des ersten, im Ursprung festgelegten Zirkelschenkels gegenüber einer zum Koordinatensystem geeichten Position des zweiten Drehgebers ermittelt werden.

Bei der zweiten Methode erfolgt die Messung der Polarkoordinate $\beta$ mittels eines an einem Schenkel gemäß einer vorteilhaften Weiterbildung der Erfindung angeordneten Meßkompaß, der die relative Position dieser Meßebene relativ zum Erdmagnetfeld oder einem künstlich erzeugten Magnetfeld berechnet. Mit anderen Worten wird bei der Aufstellung des Zirkels der vor Ort auftretende Erdmagnetfeldvektor in derjenigen Ebene gemessen, in der der Parameter $\beta$ festzulegen ist. Eine relative Positionsänderung gegenüber diesem ermittelten Erdmagnetfeldvektor liefert die dritte Polarkoordinate $\beta$.

Gemäß einer vorteilhaften Ausführungsform des Zirkels ist eine Magnetfelderzeugervorrichtung vorgesehen, die an dem ersten Schenkel, beispielsweise an dessen stationärem Dreibein angeordnet sein kann (so daß diese sich bei der Drehung des Zirkels nicht mitdreht) und mit der ein Magnetfeld erzeugt wird, dessen Magnetfeldvektor eine Eichung der Raumlage zu Beginn des Meßvorgangs festlegt. Alternativ kann auch eine Magnetfelderzeugungsvorrichtung am Schenkel eines Zirkels angeordnet sein, während der Magnetfeldsensor stationär angeordnet ist, wobei dann die Drehung des Magnetfeldes durch den Magnetfeldsensor ermittelt wird. Wird nachfolgend der erste Schenkel aus dieser mit dem Magnetfeldvektor ausgerichteten Lage herausbewegt, kann aus der Abweichung von der Ursprungslage der dritte Polarkoordinatenparameter $\beta$ berechnet werden.

Die somit ermittelten Polarkoordinaten lassen sich dann nach Wunsch problemlos auf bekannte Weise in kartesische Koordinaten x, y, z umrechnen.

In einer weiteren vorteilhaften Ausführungsform ist eine Datenschnittstelle vorgesehen, mit der die gemessenen Daten des Zirkels direkt am Meßort an ein Peripheriegerät, d.h. Datenverarbeitungsgerät weitergegeben werden können. Hierunter fällt beispielsweise eine Computerschnittstelle, über die die Meßdaten an einen Computer weitergegeben werden, welcher Computer dann über eine passende Software verfügt, um die Daten zu verwerten und deren Berechnungsgröße am Bildschirm graphisch darzustellen. Es ist ebenso möglich, ein elektronisches Versende-Modul, ein sog. e-mail-Modul vorzusehen, über das die Meßdaten via Internet verschickt werden können.

Genauso kann es vorgesehen sein, einen sogenannten GSM-Anschluß für eine Datenvermittlung via Handmobiltelefon (Handy) zu installieren.

Gemäß der Erfindung ist überdies ein Verfahren vorgesehen, mit dem Treppenkoordinaten ermittelt werden und die Raumlage der Treppe anhand dieser Koordinaten berechnet wird. Dazu werden zunächst bestimmte Ortspunkte einzelner Stufen der Treppe ermittelt. Werden diese Ortspunkte dann in räumliche Relation zueinander gesetzt, erhält man die Raumlage der vermessenen Treppe. Zur Realisierung des Verfahrens eignet sich dabei der oben näher erläuterte Meßzirkel.

In Anpassung an die räumlich großen Dimensionen bei der Vermessung einer Treppe, sieht die Erfindung in einer vorteilhaften Weiterbildung der Vorrichtung nach Anspruch 1 einen Zirkel vor, der Schenkel aufweist, von denen sich mindestens einer in seiner Länge teleskopartig verlängern bzw. verkürzen läßt. Zur Ermittlung der Koordinaten des zu messenden Ortspunktes ist es dann erforderlich, daß der in seiner Länge variabel gehaltene Zirkelschenkel einen Meßaufnehmer aufweist, mittels dem die Länge des Schenkels festgestellt werden kann. Der Zirkel kann damit an verschiedene Objekte mit unterschiedlicher Größe direkt vor Ort an entsprechend dem zu vermessenden Raumbereich angepaßt werden.

Die ermittelten Daten der Treppenstufen lassen sich nun in einem erfindungsgemäßen Verfahren zur Berechnung von Handlaufkoordinaten für den für diese Treppe vorgesehenen Handlauf verarbeiten. Gemäß der oben genannten vorteilhaften Ausführungsform erfolgt dies über eine an einen Computer angeschlossene Schnittstelle, mit der die Daten an den Computer weitergegeben werden. Zur Berechnung der Handlaufkoordinaten können einzelne Parameter des Handlaufs, wie beispielsweise dessen Dicke, dessen Fixierpunkte, etc. eingegeben werden.

In einer vorteilhaften Weiterbildung des erfindungsgemäßen Verfahrens werden die Daten der Handlaufkoordinaten dann zum Ermitteln der Biegeparameter zum Biegen des Handlaufs verwendet. Diese Datenverarbeitung erfolgt dabei in vorteilhafter Weise direkt am Meßort. Da sich die Biegevorrichtung nicht am Meßort befindet, werden in einer Weiterbildung des Verfahrens die am Meßort berechneten Biegeparameter elektronisch per Telekommunikation an die Biegemaschine übermittelt. Hierbei kann ebenso das Internet zur Durchführung der Telekommunikation zum Einsatz kommen.

Die Erfindung wird nachfolgend anhand von in der Zeichnung dargestellten Ausführungsbeispiels des näher erläutert. In der Zeichnung zeigen:

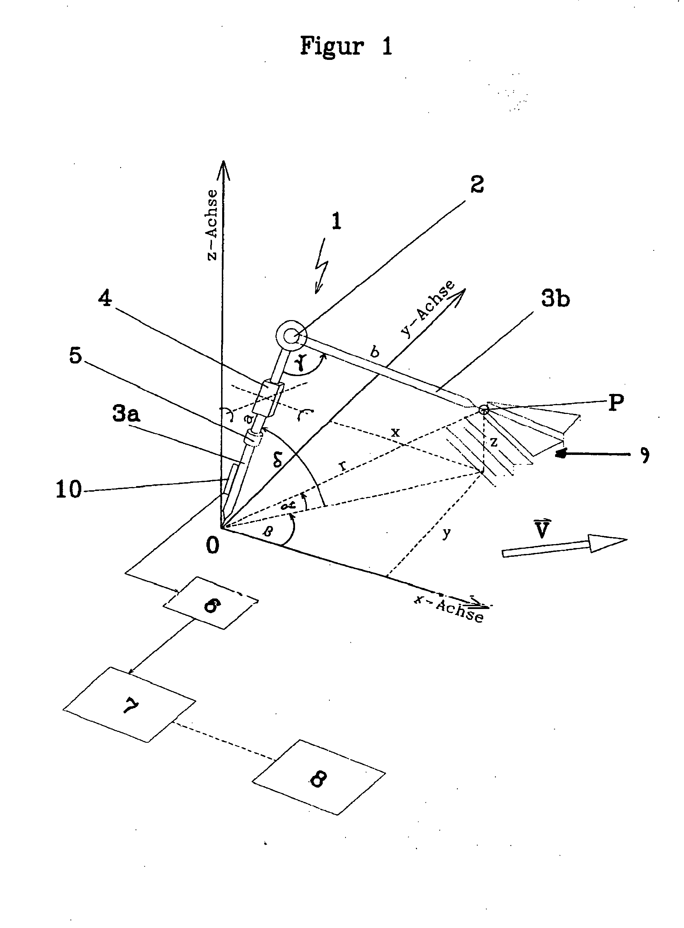

Fig. 1    eine schematische Darstellung des erfindungsgemäßen Meßzirkels, mit dem ein Verfahren zur Berechnung der Handlaufparameter für eine Treppe realisiert wird.

Der mit 1 gekennzeichnete Zirkel hat zwei in einer Ebene zueinander bewegbare Schenkel 3a, 3b mit einer jeweiligen Länge a bzw. b, welche Schenkel einen verstellbaren Winkel $\gamma$ aufspannen. Zur Messung des Ortspunktes P an einer Treppe 9 wird der Schenkel 3a an seinem freien Ende im Ursprung 0 eines Koordinatensystems festgelegt, zu welchem Ursprung die Koordinaten des Punktes P ermittelt werden. Der zweite Schenkel 3b wird nun derart geführt, daß sein freier Endpunkt mit dem zu vermessenden Ortspunkt der Treppe 9 zur Deckung kommt. Der durch die relative Bewegung der beiden Schenkel zueinander aufgespannte Winkel $\gamma$ wird mittels eines Drehgebers 2 gemessen, der die Winkelmessung in Form eines elektrischen Signals ausgibt. Durch die bekannte Länge a, b der beiden Schenkel 3a, 3b kann der Abstand r des Ortspunktes vom Koordinatenursprung nach

$$r = \sqrt{a^2 + b^2 - 2ab \cdot \cos\gamma}$$

berechnet werden. Damit ist eine von insgesamt drei Polarkoordinaten r, $\alpha$, $\beta$ festgelegt.

Die zweite Polarkoordinate $\alpha$ wird ermittelt, indem die Neigung $\delta$ des ersten Schenkels 3a gegenüber der Horizontalebene (x, y) gemessen wird:

$$\alpha = \delta - \arcsin \frac{b \cdot \sin \gamma}{r}$$

Der vorgesehene zweiachsige Neigungssensor 4 berücksichtigt dabei eine Verkippung des Zirkels 1 um die Verbindungsachse zwischen den beiden Endpunkten des Zirkels. Dieser Kippwinkel wird benötigt, um die tatsächliche Neigung $\delta$ des Zirkels in der von den beiden Schenkeln 3a, 3b aufgespannten Ebene zu ermitteln.

Die dritte Polarkoordinate $\beta$ gibt dann den Winkel der den Winkel $\alpha$ einschließenden Ebene an. Dieser Winkel wird mit einem Magnetfeldsensor 5 gemessen, der zunächst den Erdmagnetfeldvektor $\vec{v}$ in der xy-Ebene mißt und dann die relative Orientierung des Schenkels 3a in Bezug auf den Erdmagnetfeldvektor berechnet. Damit sind alle drei Polarkoordinaten r, $\alpha$ und $\beta$ eines Ortspunktes und die Orientierung der Schenkel im Raum festgelegt, welche Daten in einer Speichereinheit 10 des Zirkels abgespeichert werden. Nach der Berechnung wird das Ende des zweiten Schenkels 3b an einen neu zu vermessenden Ortspunkt gebracht und die Messung beginnt von vorne.

Die so ermittelten Daten werden an eine Schnittstelle 6 weitergegeben, um die Meßdaten dann nachfolgend in einem mobilen Computer 7 zu verarbeiten. So können die Meßpunkte direkt vor Ort mittels einer geeigneten Software am Bildschirm des Computers 7 visualisiert und überprüft werden. Der Computer ermittelt die für einen Biegevorgang des Handlaufs der Treppe 9 erforderlichen Biegeparameter, die dann über eine elektronische Telekommunikations-Datenleitung an die Biegemaschine geschickt werden.

**Patentansprüche**

1. Meßzirkel mit mindestens zwei zueinander bewegbar verbundenen Schenkeln (3a, 3b), **gekennzeichnet durch** Mittel zum Messen des Abstandes der Schenkel (3a, 3b) zueinander oder zum Messen des Winkels zwischen den Schenkeln, mindestens einen Neigungssensor (4), und Mittel zum Messen einer Drehung der **durch** die Schenkel aufgespannten Ebene.

2. Meßzirkel nach Anspruch 1, **dadurch gekennzeichnet, daß** der Neigungssensor (4) ein zweiachsiger Neigungssensor ist, mit dem der Richtungsvektor der durch die Schenkel (3a, 3b) aufgespannten Ebene ermittelt werden kann.

3. Meßzirkel nach einem der Ansprüche 1 oder 2, **dadurch gekennzeichnet, daß** am Gelenkpunkt der Schenkel ein Drehgeber (2) vorgesehen ist, mit dem der Winkel zwischen den Schenkeln (3a, 3b) gemessen wird.

4. Meßzirkel nach einem der Ansprüche 1 bis 3, **dadurch gekennzeichnet, daß** zum Messen einer Drehung der durch die Schenkel aufgespannten Ebene ein Meßkompaß (5) vorgesehen ist.

5. Meßzirkel nach einem der Ansprüche 1 bis 4, **gekennzeichnet durch** Mittel zum Erzeugen eines Magnetfeldes.

6. Meßzirkel nach einem der Ansprüche 1 bis 5, **gekennzeichnet durch** mindestens eine Schnittstelle (6) zur Kommunikation mit Datengeräten.

7. Meßzirkel nach Anspruch 6, **gekennzeichnet durch** eine PC-Schnittstelle.

8. Meßzirkel nach Anspruch 6 oder 7, **gekennzeichnet durch** ein e-mail-Modul.

9. Meßzirkel nach einem der vorangehenden Ansprüche, **dadurch gekennzeichnet, daß** mindestens ein Schenkel in Teleskop-Bauweise ausgeführt ist, durch die er in seiner Länge verschiebbar ist.

10. Verwendung einer mobilen Vorrichtung zum Ermitteln der Raumlage zum Vermessen von Treppenkoordinaten.

11. Verfahren zum Berechnen von Handlaufkoordinaten, **gekennzeichnet durch** elektronisches Ermitteln von Treppenkoordinaten, Verwendung der Treppenkoordinaten zum Ermitteln der Biegekoordinaten zum Biegen eines korrespondierenden Handlaufs.

12. Verfahren zum Biegen eines Handlaufs nach Anspruch 10, **dadurch gekennzeichnet, daß** die elektronisch ermittelten Treppenkoordinaten oder daraus errechnete Biegekoordinaten elektronisch per Telekommunikation an eine Biegemaschine übermittelt werden.

13. Verfahren nach Anspruch 11, **gekennzeichnet durch** den Einsatz des Internet zur Durchführung der Telekommunikation.

# Figur 1

**Europäisches Patentamt**

# EUROPÄISCHER RECHERCHENBERICHT

Nummer der Anmeldung

EP 01 12 0009

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | DE 34 42 675 A (HARBOTT WOLFGANG) 28. Mai 1986 (1986-05-28) | 1,9 | G01B3/16 B43L9/04 E04F11/02 |
| Y | * das ganze Dokument * | 6-8 | |
| X | WO 00 06968 A (AKHAVAN SIGARI SOHEYL ;HARUN MAHDAVI SASAN (DE)) 10. Februar 2000 (2000-02-10) | 1,3,9 | |
| Y | * Seite 3, Zeile 3-17 * * Seite 8, Zeile 10 - Seite 9, Zeile 31; Abbildungen 1-3 * | 6-8 | |
| Y | GB 2 278 316 A (HUTCHINSON MALCOLM) 30. November 1994 (1994-11-30) | 6-8 | |
| A | * Seite 2, Zeile 9 - Seite 3, Zeile 17; Abbildungen 1,2 * | 1-5,9 | |

**RECHERCHIERTE SACHGEBIETE (Int.Cl.7)**

G01B
B43L
E04F

~~Der vorliegende Recherchenbericht wurde für alle Patentansprüche erstellt~~

| Recherchenort | Abschlußdatum der Recherche | Prüfer |
|---|---|---|
| MÜNCHEN | 21. Januar 2002 | Beyfuß, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C09)

Europäisches
Patentamt

## GEBÜHRENPFLICHTIGE PATENTANSPRÜCHE

Die vorliegende europäische Patentanmeldung enthielt bei ihrer Einreichung mehr als zehn Patentansprüche.

☐ Nur ein Teil der Anspruchsgebühren wurde innerhalb der vorgeschriebenen Frist entrichtet. Der vorliegende europäische Recherchenbericht wurde für die ersten zehn sowie für jene Patentansprüche erstellt, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die ersten zehn Patentansprüche erstellt.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☐ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☒ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

1-9

**Europäisches Patentamt**

## MANGELNDE EINHEITLICHKEIT
## DER ERFINDUNG
## ERGÄNZUNGSBLATT B

Nummer der Anmeldung

EP 01 12 0009

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-9

   Messzirkel mit zwei Schenkeln, Mitteln zum Messen des Schenkelabstands oder des Schenkelwinkels, einem Neigungssensor und Mitteln zur Messung einer Drehung der durch die Schenkel aufgespannten Ebene.

2. Anspruch : 10

   Verwendung einer mobilen Vorrichtung zur Ermittlung der Raumlage zum Vermessen von Treppenkoordinaten

3. Ansprüche: 11-13

   Verfahren zum Berechnen von Handlaufkoordinaten, wobei die Treppenkoordinaten elektronisch ermittelt werden, um Biegekoordinaten zu ermittelm zum Biegen des korrespondierenden Handlaufs.

**ANHANG ZUM EUROPÄISCHEN RECHERCHENBERICHT**
**ÜBER DIE EUROPÄISCHE PATENTANMELDUNG NR.**

EP 01 12 0009

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-01-2002

| Im Recherchenbericht angeführtes Patentdokument | | Datum der Veröffentlichung | Mitglied(er) der Patentfamilie | | Datum der Veröffentlichung |
|---|---|---|---|---|---|
| DE 3442675 | A | 28-05-1986 | DE | 3442675 A1 | 28-05-1986 |
| WO 0006968 | A | 10-02-2000 | DE | 19833685 A1 | 17-02-2000 |
| | | | WO | 0006968 A1 | 10-02-2000 |
| | | | EP | 1099091 A1 | 16-05-2001 |
| | | | US | 2001037581 A1 | 08-11-2001 |
| GB 2278316 | A | 30-11-1994 | KEINE | | |

EPO FORM P0461

Für nähere Einzelheiten zu diesem Anhang : siehe Amtsblatt des Europäischen Patentamts, Nr.12/82